# DEMANDE DE BREVET EUROPEEN

(11) **EP 4 838 693 A1**
(43) Date de publication de la demande: **11.11.2026**
(21) Numéro de dépôt: 25305663.4
(22) Date de dépôt: 09.05.2025
(51) Int. Cl.: H01Q 1/02, H01Q 1/24, H01Q 1/42

(54) **DISPOSITIF RADIOFRÉQUENCE D'UN RÉSEAU DE TÉLÉCOMMUNICATION**

(71) Demandeur: Free Mobile, 75008 Paris (FR)
(72) Inventeur: FIEVET, Bertrand, Gilbert, Arthur, 78000 Versailles (FR)
(74) Mandataire: Lavoix

(57) **Abrégé**

La présente invention concerne un dispositif radiofréquence (20) d'un réseau de télécommunication, ledit dispositif radiofréquence étant propre à émettre et recevoir en extérieur des signaux radiofréquence, configuré pour être installé en toiture de bâtiment, et comprenant au moins :
- un ensemble radiofréquence, à convexion naturelle, comprenant un système antennaire (30) et un module radiofréquence (26, 28),
- un module d'alimentation électrique dudit ensemble radiofréquence ;
- un habillage (22) transparent aux ondes électromagnétiques formant une enceinte opaque autour dudit ensemble radiofréquence,
le volume dudit dispositif radiofréquence étant inférieur à un seuil de volume prédéterminé égal à quinze litres et sa puissance isotrope rayonnée équivalente totale étant supérieure à cinquante-cinq dBmi.

## Description

La présente invention concerne un dispositif radiofréquence d'un réseau de télécommunication, ledit dispositif radiofréquence étant propre à émettre et recevoir des signaux radiofréquence, configuré pour être installé en toiture de bâtiment.

La présente invention concerne également un système radiofréquence associé.

Les besoins en télécommunications croissent inexorablement de manière exponentielle.

Le déploiement de sites radio est un processus complexe pour les opérateurs de télécommunications.

En effet, actuellement, pour les opérateurs de télécommunications, en raison de l'encombrement associé aux dispositifs radiofréquences actuels, installés en extérieur (de l'anglais *outdoor*)*,* il est difficile de trouver de nouveaux emplacements extérieurs d'installation adaptés et acceptables pour les bailleurs et les riverains.

Autrement dit, l'installation de site radio fait actuellement face à des contraintes techniques et infrastructurelles, notamment du fait de la densité urbaine et des besoins d'alimentation électrique et en fibre car chaque site a besoin d'être raccordé à l'électricité et à un réseau de transmission en fibre optique, ce qui peut être long (jusqu'à deux ans entre la décision d'installation et la mise en service effective), coûteux, voire impossible.

Ainsi, en ville, il y a pénurie de sites propres à accueillir facilement le volume et les contraintes d'installation, notamment en termes de puissance d'alimentation et en termes de raccordement, des dispositifs de radiofréquence actuels.

Au vu de la nécessité croissante de densifier les réseaux de télécommunication et donc de réduire la distance entre deux sites radio voisins (i.e. d'améliorer le maillage des réseaux de télécommunications), le but de l'invention est de proposer une solution technique permettant d'accroitre le déploiement d'équipements radio, en simplifiant la recherche d'emplacements d'accueil adéquats, tout en le simplifiant et en le rendant réalisable dans des environnements où actuellement cela s'avère impossible.

A cet effet, l'invention a pour objet un dispositif radiofréquence d'un réseau de télécommunication, ledit dispositif radiofréquence étant propre à émettre et recevoir en extérieur des signaux radiofréquence, configuré pour être installé en toiture de bâtiment, et comprenant au moins :
- un ensemble radiofréquence, à convexion naturelle, comprenant un système antennaire et un module radiofréquence,
- un module d'alimentation électrique dudit ensemble radiofréquence ;
- un habillage transparent aux ondes électromagnétiques formant une enceinte opaque autour dudit ensemble radiofréquence,
le volume dudit dispositif radiofréquence étant inférieur à un seuil de volume prédéterminé égal à quinze litres et sa puissance isotrope rayonnée équivalente totale étant supérieure à cinquante-cinq dBmi

Ainsi, la présente invention définit un nouveau type de dispositif radiofréquence « outdoor » compact dont le volume, est inférieur (voire strictement inférieur) à quinze litres et (en cumul) dont la puissance isotrope rayonnée équivalente totale est supérieure (voire strictement supérieure) à cinquante-cinq dBmi.

Le dispositif radiofréquence proposé selon la présente invention est donc à la fois compact et performant en étant basé sur une sélection cumulative en volume et en puissance isotrope rayonnée équivalente totale (i.e. la puissance isotrope rayonnée équivalente totale de l'ensemble radiofréquence qui comprend à la fois un système antennaire et un module radiofréquence).

La plage de puissance sélectionnée et la plage volumique sélectionnée permettent en synergie d'obtenir un fonctionnement opérationnel de type « mini macro », à savoir que le dimensionnement proposé du dispositif radiofréquence « outdoor » permet un déploiement aisé en toiture de bâtiment, tout en étant suffisamment puissant pour limiter le nombre de dispositifs radiofréquence à combiner au sein d'un système de sorte à obtenir une couverture souhaitée. Autrement dit, via un encombrement « mini », la présente invention est propre à être utilisée pour atteindre les mêmes performances qu'un site radio « macro » (i.e. macro-cellule) actuel de l'état de la technique (de l'anglais Macro time-division duplex TDD and/or frequency-division duplex FDD Radio site).

Le déploiement de site radio basé sur l'utilisation des dispositifs radiofréquence proposés selon la présente invention permet donc une installation sur une infrastructure existante à savoir une toiture de bâtiment.

A titre de comparaison pour une application/couverture de télécommunication équivalente, par rapport à des sites radio existants la présente invention permet de former un système radio fréquence aux performances équivalentes, avec par exemple une réduction de poids de site radio par plus de 7,5 (i.e. poids 7,5 fois plus petit), une réduction de la puissance de sortie par plus de 3,5 (i.e. puissance de sortie 3,5 fois plus petite), une réduction de la puissance consommée par plus de 4 (i.e. puissance consommée 4 fois plus petite), et une réduction de volume par 9 (i.e. volume 9 fois plus petit).

Suivant d'autres aspects avantageux de l'invention, le dispositif radiofréquence comprend une ou plusieurs des caractéristiques suivantes, prises isolément ou suivant toutes les combinaisons techniquement possibles :
- ledit volume est contenu dans un cylindre de 24cm de diamètre et de 60cm de hauteur ;
- lequel le poids maximal dudit dispositif radiofréquence est sensiblement égal à 12kg ;
- ledit habillage comprend au moins deux ouvertures dont la disposition l'une par rapport à l'autre est configurée pour faire circuler l'air au sein de ladite enceinte ;
- lesdites au moins deux ouvertures sont localisées aux extrémités verticales dudit habillage ;
- ledit dispositif radiofréquence présente un indicateur représentatif de la direction de son faisceau d'émission ;
- ledit habillage est configuré pour être solidarisé à une souche de cheminée de bâtiment ou à un conduit de cheminée ou de ventilation ;
- ledit habillage est configuré pour se substituer à un mitron de toiture de bâtiment ;
- ledit dispositif radiofréquence comprend en outre au moins un port de connexion configuré pour relier par fibre optique ledit ensemble radiofréquence à un réseau optique passif ;
- ledit réseau optique passif est un réseau fibre optique jusqu'au domicile FTTH ;
- ledit dispositif radiofréquence comprend en outre un module GNSS interne au dispositif.

L'invention concerne également un système radiofréquence pour réseau de télécommunication configuré pour être installé en toiture de bâtiment comprend au moins deux dispositifs radiofréquence tels que décrits précédemment.

Suivant d'autres aspects avantageux de l'invention, le système radiofréquence comprend une ou plusieurs des caractéristiques suivantes, prises isolément ou suivant toutes les combinaisons techniquement possibles :
- ledit système comprend au moins deux dispositifs radiofréquence tels que décrits précédemment configurés pour émettre en combinaison dans un même secteur d'émission ;
- ledit système comprend un module configuré pour multiplexer les signaux émis par lesdits au moins deux dispositifs radiofréquence dans le même azimut ;
- ledit système comprend au moins trois dispositifs radiofréquence tels que décrits précédemment configurés pour émettre respectivement dans trois secteurs d'émission distincts.

L'invention apparaîtra plus clairement à la lecture de la description qui va suivre, donnée uniquement à titre d'exemple non limitatif, et faite en référence aux dessins dans lesquels :
[Fig. 1] la figure 1 illustre l'environnement d'installation d'un dispositif radiofréquence d'un réseau de télécommunication selon la présente invention ;
[Fig.2] la figure 2 est une représentation schématique globale d'un dispositif radiofréquence d'un réseau de télécommunication selon la présente invention ;
[Fig. 3] la figure 3 est une représentation schématique d'un exemple de mise en œuvre d'un système radiofréquence pour réseau de télécommunication configuré pour être installé en toiture de bâtiment selon la présente invention.

Dans la suite de la description, les expressions « sensiblement égal à » et/ou « de l'ordre de » s'entendent comme une relation d'égalité à plus ou moins 10%, c'est-à-dire avec une variation d'au plus 10%, de préférence encore comme une relation d'égalité à plus ou moins 5%, c'est-à-dire avec une variation d'au plus 5%.

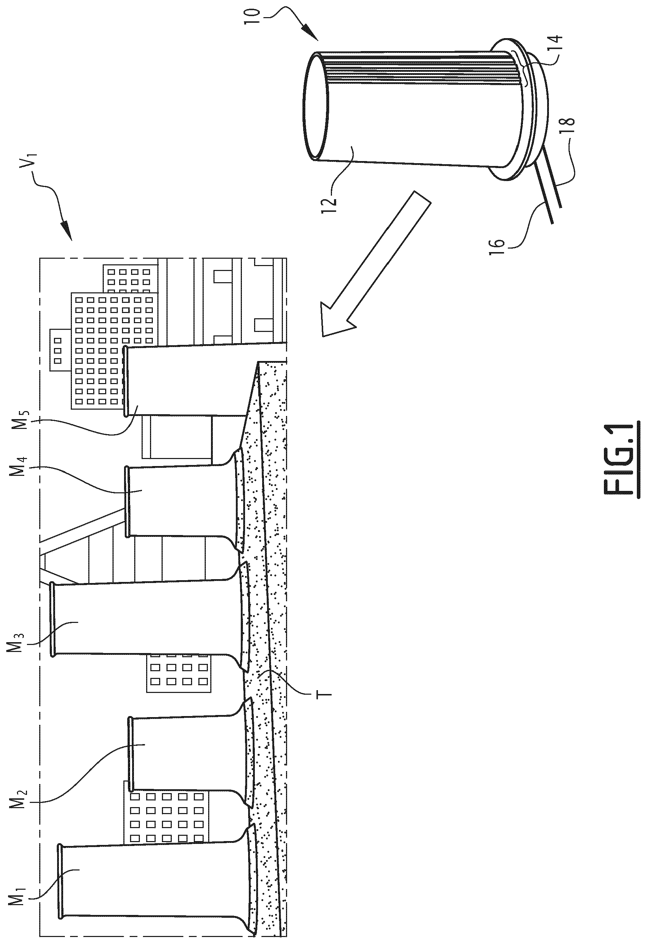

La figure 1 illustre un environnement d'installation V₁ du dispositif 10 radiofréquence d'un réseau de télécommunication selon la présente invention.

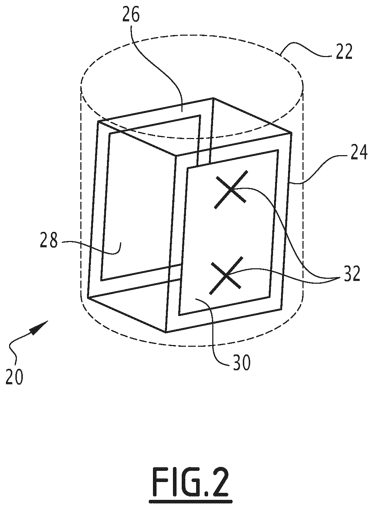

Plus précisément, le dispositif 10 radiofréquence illustré par la figure 1 comprend un ensemble radiofréquence, illustré par la suite en relation avec la figure 2, non ventilé mécaniquement mais à convexion naturelle, comprenant un système antennaire et un module radiofréquence, un module d'alimentation électrique dudit ensemble radiofréquence.

Selon la présente invention, la puissance isotrope rayonnée équivalente totale de cet ensemble est supérieure (voire strictement supérieure) à cinquante-cinq dBmi.

Sur la figure 1, ledit ensemble radiofréquence et ledit module d'alimentation électrique sont masqués par un habillage 12 transparent aux ondes électromagnétiques formant une enceinte opaque autour dudit ensemble radiofréquence.

Selon l'exemple de la figure 1, avantageusement, le volume dudit dispositif radiofréquence 10 est inférieur (voire strictement inférieur) à un seuil de volume prédéterminé égal à quinze litres.

Autrement dit, selon la présente invention il est proposé de fournir un dispositif radiofréquence qui au sein d'un volume contraint en taille est propre à présenter une puissance isotrope rayonnée équivalente totale (i.e. PIRE [dBmi] totale) de cet ensemble est supérieure (voire strictement supérieure) à cinquante-cinq dBmi (i.e. 55dBmi au minimum).

Comme illustré par la figure 1, via le volume sélectionné inférieur (voire strictement inférieure) à 15L, le dispositif radiofréquence 10 outdoor proposé selon la présente invention est propre à (i.e. configuré pour) se substituer à un mitron de toiture de bâtiment, ce qui permet avantageusement son installation quasi « naturelle » en toiture T de bâtiment comme illustré par la flèche de la figure 1, ladite toiture comprenant par ailleurs des mitrons existants M₁, M₂, M₃, M₄, M₅.

Un Mitron en toiture désigne un dispositif installé sur le toit d'un bâtiment, généralement pour assurer la ventilation des conduits de fumée, des gaines techniques ou des réseaux de ventilation. Les mitrons classiques peuvent être en terre cuite, en métal ou en béton, et existent sous différentes formes : carrée, ronde, ajourée, etc., adaptées à l'architecture du bâtiment. C'est donc un équipement traditionnel présent dans toutes les villes avec différentes couleur et forme, et par conséquent très banal dans les environnements urbains, même dans des zones protégées, car installé sur des cheminées traditionnelles, par définition en hauteur et suffisamment dégagé afin de permettre des flux d'air suffisant pour assurer le tirage du conduit de cheminée qu'il termine.

En complément facultatif, ledit volume du dispositif radiofréquence 10 (i.e. inférieur à 15L) est contenu dans un cylindre de 24cm de diamètre et de 60cm de hauteur. Autrement dit, le diamètre du dispositif radiofréquence est inférieur à 24cm et ce tout en présentant un volume inférieur à 15 litres. De même, sa hauteur n'excède pas 60cm de haut, et ce tout en présentant un volume inférieur à 15 litres.

En effet, les mitrons existants présentent des dimensions dont le volume maximal est défini, par exemple en France, par le « mitron Lorientais » dont le volume est sensiblement égal ou est contenu dans un cylindre de 24cm de diamètre et de 60cm de hauteur.

Selon un autre exemple, le mitron parisien de taille standard, est typiquement de 19cm de diamètre et de 30 à 50cm de haut.

En complément facultatif, le poids maximal dudit dispositif radiofréquence 10 est sensiblement égal à 12kg (i.e. kilogrammes). Un tel poids du dispositif radiofréquence 10 est en effet la plupart du temps supportable par les éléments de toiture T d'un bâtiment, et correspond par exemple au poids maximal de mitron utilisé en France, à savoir celui du « mitron Charentais ».

Sur l'exemple de la figure 1, ledit habillage comprend au moins deux ouvertures 14 (i.e. prises d'air) dont la disposition l'une par rapport à l'autre est configurée pour faire circuler l'air au sein de ladite enceinte, et ainsi ventiler naturellement ledit ensemble radiofréquence dudit dispositif radiofréquence 10.

Sur l'exemple de la figure 1, de telles ouvertures 14 sont ménagées dans la paroi latérale du cylindre.

En complément, ou à titre d'alternative, lesdites au moins deux ouvertures 14 sont localisées aux extrémités verticales dudit habillage 12. Autrement dit, les ouvertures sont localisées en base et sommet de l'habillage de sorte à permettre une ventilation verticale par le haut et le bas du dispositif radiofréquence 10 selon la présente invention.

En complément facultatif, ledit habillage 12 est configuré pour être solidarisé à une souche de cheminée de bâtiment ou à un conduit de cheminée ou de ventilation.

Une telle localisation dudit dispositif radiofréquence 10 est avantageuse car, en disposant ainsi d'un dégagement suffisant par rapport à la toiture, elle est propre à éviter « l'effet terrasse » qui limiterait sa couverture radio et ses performances en générant un masque ou des réflexions intempestives. Plus précisément, on cherche, selon la présente invention, à installer ledit dispositif radiofréquence 10, soit en bordure de toiture ou suffisamment en hauteur pour éviter « l'effet terrasse » qui consiste à avoir des obstacles proches et qui empêchent le signal RF de se propager ce qui limite le rayonnement de l'antenne du dispositif radiofréquence 10 dans certaines directions (surtout vers le bas alors que les téléphones mobiles sont justement souvent en contrebas par rapport au dispositif radiofréquence 10) « L'effet terrasse » est notamment abordé dans le document accessible via le lien URL suivant : https://www.hypercable.fr/images/stories/wirake/Installation des antennes V.2.pdf.

Selon une variante, ledit habillage 12 est en tant que tel un mitron de toiture de bâtiment. Autrement dit, dans ce cas le dispositif radiofréquence 10 est directement solidarisé à un conduit de cheminée ou de ventilation existant. A ce titre, la forme dudit habillage 12 est propre à être adaptée en fonction de sa localisation géographique de sorte à s'intégrer parfaitement (i.e. se fondre) dans le paysage des toitures urbaines de la zone géographique dans lequel le site radio associé est déployé.

Une telle variante permet techniquement de réutiliser directement une infrastructure d'installation existante et le cas échéant, notamment lorsque ledit conduit de cheminée ou de ventilation existant n'est plus utilisé pour sa fonction d'origine de conduit de cheminée ou de ventilation, de le réutiliser pour y passer un câble d'alimentation 16 dudit dispositif radiofréquence 10.

Ledit câble d'alimentation 16 est alors avantageusement invisible en toiture et protégé des intempéries et du vandalisme au sein dudit conduit de cheminée ou de ventilation, désaffecté de sa fonction d'origine, ce qui permet de limiter la maintenance associée et les risques d'infiltration d'eau dans la toiture.

A noter que le dispositif radiofréquence 10 selon la présente invention, est de par son volume compact propre à faciliter son installation technique en toiture, y compris à une localisation distincte de celle en regard d'un conduit de cheminée ou de ventilation, notamment lorsque ledit conduit de cheminée ou de ventilation est toujours utilisé selon sa fonction d'origine.

En complément facultatif, ledit dispositif radiofréquence comprend en outre au moins un port de connexion configuré pour relier par fibre optique 18 ledit ensemble radiofréquence à un réseau optique passif.

Selon une variante de ce complément facultatif, ledit réseau optique passif est un réseau fibre optique jusqu'au domicile FTTH (de l'anglais *Fiber to the Home*)*.* Le dispositif radiofréquence 10 est alors relié avec une fibre 18 préférablement au point de branchement optique PBO situé typiquement dans le bâtiment comme peut l'être raccordé un foyer au réseau FTTH, ou sinon directement au point de mutualisation PM situé typiquement dans la rue.

A noter que lorsque ledit habillage 12 est en tant que tel un mitron de toiture de bâtiment (i.e. directement solidarisé à un conduit de cheminée ou de ventilation existant), une telle variante permet techniquement de réutiliser directement une infrastructure d'installation existante et le cas échéant, notamment lorsque ledit conduit de cheminée ou de ventilation existant n'est plus utilisé pour sa fonction d'origine de conduit de cheminée ou de ventilation, de le réutiliser pour y passer également ladite fibre 18.

En effet, une difficulté en déploiement de site radio est l'accès au réseau de transport d'information (i.e. le retour d'information, de l'anglais *transmission backhauling*)*,les* stations de base étant actuellement connectées via faisceaux hertziens ou par fibre dédiée, au moins sur le dernier kilomètre, et la présente invention propose de remédier à cette difficulté en utilisant le réseau fibre optique jusqu'au domicile FTTH existant pour assurer le transport d'information de chaque dispositif radiofréquence utilisé, ce qui permet de réduire la complexité et le coût associé au transport actuel de l'information.

Sur la figure 1, de par l'habillage opaque 12 (i.e. visuellement), la structure interne du dispositif radiofréquence 10 est invisible de l'extérieur.

La figure 2, est une représentation schématique globale d'un exemple 20 de dispositif radiofréquence d'un réseau de télécommunication selon la présente invention et vise à illustrer plus en détail sa structure interne.

Plus précisément, à l'intérieur de l'habillage 22 neutre (i.e. transparent) aux ondes électromagnétiques, le dispositif radiofréquence selon cet exemple 20 comprend un ensemble radiofréquence 24, non ventilé mécaniquement, mais par convexion naturelle afin d'éviter avantageusement des nuisances sonores liées aux vibrations qui pourraient gêner les riverains en se propageant dans la structure du bâtiment ou plus particulièrement dans les conduits de cheminées, le cas échéant réutilisés pour le câblage du dispositif radiofréquence 10. A noter que l'absence de ventilateur mécanique requiert un volume minimal prédéterminé pour la dissipation de la chaleur par convexion naturelle, toutefois selon la présente invention, les dimensions dudit habillage 22 restent avantageusement également conformes à la plage de volume sélectionnée, à savoir inférieure (voire strictement inférieure) à quinze litres.

Selon un aspect optionnel, l'habillage 22 du dispositif radiofréquence 20 présente notamment un indice de protection égal à IP65, à savoir étanche à la poussière et propre à protéger contre les projections d'eau, et une conformité aux normes sismiques de zone 4.

Cet ensemble radiofréquence 24 comprend un module radiofréquence composé sur l'exemple de la figure 2 d'une partie radiante 26, tel un radiateur, associée à une carte 28 numérique et analogique.

Une telle partie radiante 26 rayonne la chaleur produite par la carte numérique et analogique 28, ladite chaleur étant elle-même dissipée par convexion naturelle.

Les ouvertures 14 précitées en relation avec la figure 1 dudit habillage 22, à savoir selon le mode de réalisation de la figure 2 localisées aux extrémités verticales dudit habillage 22, permettent en effet de ventiler ledit ensemble radiofréquence 24 de sorte à évacuer la chaleur générée par la partie radiante 26 associée à ladite carte 28 numérique et analogique, et éviter ainsi une surchauffe de ces composants.

Ledit ensemble radiofréquence 24 comprend en outre un système antennaire 30 comprenant par exemple, selon le schéma de la figure 2, une antenne composée de deux dipôles distincts 32.

Selon la présente invention, ledit ensemble radiofréquence 24 est spécifiquement configuré pour que sa puissance isotrope rayonnée équivalente totale soit supérieure (voire strictement supérieure) à cinquante-cinq dBmi.

Pour ce faire, selon une configuration possible, chaque antenne présente un gain de 13dBi, est propre à émettre sur un secteur de 120° avec une largeur de faisceau de l'ordre de 65° à -3dB.

Selon un complément optionnel, non représenté, ledit dispositif radiofréquence 20 selon la présente invention, présente un indicateur représentatif de la direction de son faisceau d'émission.

En outre, ledit module radiofréquence comprend au sein de sa carte 28 numérique et analogique une pluralité d'amplificateurs dont la puissance est adaptée de sorte à ce que la puissance isotrope rayonnée équivalente totale soit supérieure (voire strictement supérieure) à cinquante-cinq dBmi.

Il est à noter que la configuration de cette carte 28 numérique et analogique n'est pas évidente car sa dimension est limitée par le volume dudit dispositif radiofréquence 10 à savoir inférieur (voire strictement inférieur) à un seuil de volume prédéterminé égal à 15L (i.e. quinze litres), les composants de cette carte numérique et analogique radiofréquence sont donc judicieusement choisis, de même que son agencement avec la partie radiante 26 au sein de l'habillage 22.

Selon une variante avantageuse de la présente invention, ledit agencement est optimisé de sorte que l'occupation volumique de l'ensemble radiofréquence 24 soit maximale au sein de l'habillage 22. Autrement dit, si l'on considère que l'habillage 22 est de forme sensiblement cylindrique, selon cette variante avantageuse, la partie radiante 26 présente une forme configurée pour, selon une vue en section (i.e. en coupe, en tranche) du cylindre d'habillage, suivre au mieux (i.e. épouser sensiblement) la courbure du cylindre d'habillage 22 dans lequel il est disposé.

Pour ce faire, la partie radiante 26 est par exemple configurée pour être contenue dans un demi-cylindre dont la face rectangulaire est en vis-à-vis de ladite carte 28 numérique et analogique, tandis que sa surface latérale extérieure arrondie est en vis-à-vis de la surface latérale intérieure arrondie du cylindre d'habillage 22. Selon cet exemple, la partie radiante 26 comprend par exemple une pluralité d'ailettes, qui selon ladite section s'étendent selon des directions correspondant à des rayons distincts dudit demi-cylindre, ou parallèlement les unes par rapport aux autres selon une direction perpendiculaire à ladite face rectangulaire en vis-à-vis de ladite carte 28 numérique et analogique.

Une telle configuration de la partie radiante 26 permet avantageusement de maximiser l'échange thermique avec la paroi de l'habillage 22.

D'autres configurations de parties radiantes sont propres à être utilisées telles qu'une configuration où la partie radiante 26 présente une forme sensiblement parallélépipédique dont les angles droits sont par exemple en option arrondis pour suivre partiellement au mieux la courbure du cylindre d'habillage 22 dans lequel il est disposé.

Selon un exemple, ces composants sont conformes aux normes 3GPP, et propres à mettre en œuvre des multiplexages TDD et/ou FDD, à émettre dans la bande n78, et plus précisément dans la gamme de fréquence de 3400 à 3800 MHz avec une largeur de bande instantanée IBW (de l'anglais *Instantaneous Bandwidth*) de l'ordre de 400MHz, et largeur de bande occupée OBW (de l'anglais *Occupied Bandwidth*) de 100MHz, et selon les normes 5G.

Ces composants sont propres à supporter en liaison descendante une modulation d'amplitude en quadrature tel qu'au maximum la modulation 256QAM, et en liaison montante, une modulation d'amplitude en quadrature tel qu'au maximum la modulation 64QAM.

Pour satisfaire l'exigence de puissance isotrope rayonnée équivalente totale supérieure (voire strictement supérieure) à cinquante-cinq dBmi, en fonction du système antennaire 30 choisi, ladite carte numérique et analogique est propre à comprendre une pluralité de chaines d'amplification.

A titre d'exemple, selon une première configuration, la carte électronique numérique et analogique comprend par exemple 4 chaines dédiées à la transmission et à la réception, soit une configuration dite « 4T4R », la puissance maximale de sortie par chaine étant, par exemple, de 15W soit 60W au total, i.e. 48dBm, associée à une antenne dont le gain est de 13dBi, soit une PIRE totale de 61dBmi, ce qui est bien supérieur à 55dBmi. L'ensemble radiofréquence 24 correspondant à cette première configuration, formé du système antennaire 30 et du module radiofréquence, lui-même composé par la partie radiante 26, et la carte 28 numérique et analogique, présente un volume de onze litres, et l'habillage 22 présente un diamètre de 19cm et une hauteur de 50cm de haut, soit un volume total de 14,18 litres.

Plus précisément dans cet exemple de première configuration, selon une vue en coupe (i.e. en tranche) selon la hauteur de l'habillage 22 sensiblement cylindrique de diamètre 19cm, l'ensemble formé de la carte électronique 28 numérique et analogique et du système antennaire correspond sensiblement à un rectangle de 1,24dm² (i.e. de longueur égale à 17cm et de largeur égale 7,3cm) inscrit dans le cercle de 19cm de diamètre (i.e. d'aire égale à 2.83529 dm²) de l'habillage 22. La partie radiante 26 présente une forme en demi-cercle (selon la coupe et en demi-cylindre en volume) tel que décrit précédemment, et une aire de demi-cercle de 1,01dm2, la base du demi-cercle étant en vis-à-vis de la largeur dudit rectangle.

Ainsi, selon la tranche, l'ensemble radiofréquence 24 occupe une surface cumulée de 2,25 dm², sa hauteur étant de 4,9dm, on obtient bien un volume d'environ 11 litres (11,025 litres) ce qui occupe 77,75% du volume de l'habillage 22.

A titre d'exemple, selon une deuxième configuration, la carte électronique numérique et analogique comprend par exemple 8 chaines dédiées à la transmission et à la réception, soit une configuration dite « 8T8R », la puissance maximale de sortie par chaine étant, par exemple, de 7W soit 56W au total, i.e. 47,48dBm, associée à une antenne dont le gain est de 13dBi, soit une PIRE totale de 60,48dBmi, ce qui est bien supérieur à 55dBmi. L'ensemble radiofréquence 24 correspondant à cette configuration, formé du système antennaire 30 et du module radiofréquence, lui-même composé par la partie radiante 26, par exemple de forme parallélépipédique, associée à la carte 28 numérique et analogique (de 12 cm par 48cm), présente un volume de 11cmx15cmx49cm, soit 8,09 litres et l'habillage 22 correspondant présente un diamètre de 19cm et une hauteur de 50cm de haut soit un volume total de 14,18 litres.

Toute autre configuration (i.e. arrangement) conforme aux plages de volume et de PIRE sélectionnées sont propres à être mises en œuvre selon la présente invention.

Un tel dispositif radiofréquence 20 est propre à être alimenté via une tension alternative d'alimentation comprise entre 76 et 228VCA. La puissance consommée maximale est, par exemple, de 250W, typiquement 200W.

En option, le dispositif radiofréquence 20 comprend une batterie de secours dont le temps d'autonomie est de l'ordre de l'heure, afin de protéger le dispositif radiofréquence 20 des coupures courtes liées au réseau électrique.

En complément facultatif, ledit dispositif radiofréquence comprend en outre un module de système global de positionnement par satellite GNSS (de l'anglais *Global Navigation Satellite System).*

Le module GNSS est un composant électronique utilisé avantageusement selon ce complément facultatif, pour déterminer la position géographique précise du dispositif radiofréquence, en utilisant les signaux provenant de satellites en orbite autour de la Terre. Les systèmes GNSS incluent des technologies comme le GPS (de l'anglais *Global Positioning System*) des États-Unis, GLONASS de la Russie, Galileo de l'Union européenne, et BeiDou de la Chine. Il est aussi utilisé pour déterminer l'orientation du dispositif radiofréquence sur le plan horizontal (i.e. en azimut).

A noter que du fait de sa nature « outdoor », le dispositif radiofréquence 20 selon la présente invention est configuré pour fonctionner de -40°C à +55°C, et à être stocké à une température comprise entre -40°C et +70°C.

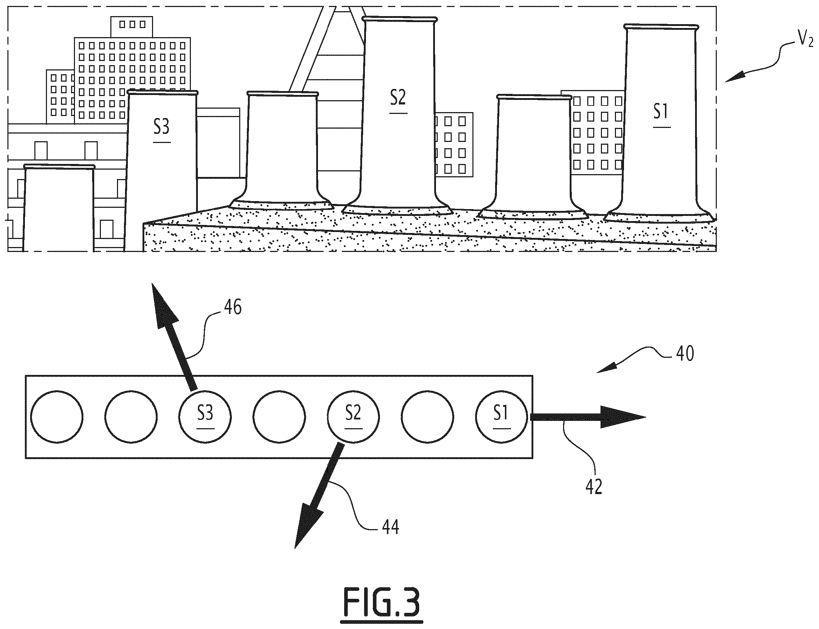

La figure 3 est une représentation schématique d'un exemple de mise en oeuvre d'un système radiofréquence 40 pour réseau de télécommunication configuré pour être installé en toiture de bâtiment tel qu'illustré par la vue V₂ de la figure 3.

En effet, la présente invention porte également sur un tel système radiofréquence 40 pour réseau de télécommunication qui comprend au moins deux dispositifs radiofréquence tels que précédemment décrits.

Selon le mode de réalisation de la figure 3, ledit système radiofréquence comprend au moins trois dispositifs radiofréquence S₁, S₂, et S₃ configurés pour émettre chacun respectivement dans trois secteurs d'émission distincts représentés respectivement par leur direction d'émission à savoir selon la direction de secteur 42 pour le dispositif radiofréquence S₁, selon la direction de secteur 44 pour le dispositif radiofréquence S₂, selon la direction de secteur 46 pour le dispositif radiofréquence S₃.

Ainsi, via cette combinaison de dispositifs radiofréquence selon la présente invention, le système radiofréquence résultant se comporte comme un Mini Macro site radio propre à couvrir trois secteurs angulaires d'émission distincts de sorte à fournir par exemple une couverture globale de 3x120°=360°.

A titre d'alternative et/ou en complément facultatif, selon un autre mode de réalisation ledit système comprend au moins deux dispositifs radiofréquence selon la présente invention configurés pour émettre en combinaison dans un même secteur d'émission.

En effet, obtenir un dispositif radiofréquence conforme à la combinaison spécifique précitée de plage de volume et de plage de PIRE[dBmi] relève du défi du fait que sa capacité de puissance isotrope rayonnée équivalente est limitée par ledit volume disponible, et pour améliorer encore plus les performances globales du système, notamment par secteur, il est proposé de combiner au moins deux dispositifs radiofréquence au sein du même secteur.

Ainsi, en reprenant l'une des configurations précédentes de dispositif radiofréquence basée sur l'utilisation d'au moins 4 chaines d'émission-réception, par exemple MIMO, au sein dudit dispositif radiofréquence, il est proposé d'augmenter la capacité d'émission-réception par secteur en utilisant au moins deux dispositifs radiofréquence, soit 8 chaines MIMO, via lesdits deux dispositifs radiofréquence déployés avec le même azimut afin de couvrir le même secteur.

Plus précisément, selon la présente invention, il a été déterminé par calcul, que trois dispositifs radiofréquences, conformes aux plages de volume et de puissance isotrope rayonnée équivalente totale sélectionnées, et combinés au sein d'un même secteur, sont propres à augmenter la capacité d'émission-réception de ce secteur par rapport à un dispositif outdoor d'émission-réception classique.

En effet, par calcul, les inventeurs ont démontré qu'un système radiofréquence avec trois sites, chacun équipé de trois dispositifs radiofréquence (un par secteur), soit neuf dispositifs radiofréquence au total, fournit la même couverture en zone urbaine très dense ainsi que la même capacité qu'un site radio « macro » à trois secteurs de 3x120°=360°, avec trois dispositifs classiques « macros » et cela tout en présentant un volume cumulé (i.e. cumul du volume des neuf dispositifs radiofréquences) plus de sept fois inférieur.

Selon une variante optionnelle de ce mode de réalisation basé sur une pluralité de dispositifs radiofréquence par secteur (même dans une même cellule), ledit système comprend un module configuré pour multiplexer les signaux émis par lesdits au moins deux dispositifs radiofréquence dans le même azimut.

Ledit module de multiplexage est notamment intégré au sein d'une unité distribuée DU (de l'anglais *Distributed Unit*) ou centralisée CU (de l'anglais *Central Unit*) pour gérer les signaux provenant des au moins deux dispositifs radiofréquence associés au même secteur, de sorte à ce qu'ils soient perçus comme provenant de la même cellule, et ce en mettant en œuvre un traitement de signal pertinent propre à assurer par exemple un fonctionnement MIMO multi-utilisateur et une formation de faisceau performante. Une telle gestion, au sein d'un même intervalle de temps (de l'anglais time slot), permet à ladite unité distribuée ou centralisée de multiplexer plusieurs utilisateurs simultanément, ce qui permet au moins de doubler la capacité de traitement maximal d'une cellule et de réduire l'écart avec des produits radiofréquence « macro » selon l'état de la technique.

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

La présente invention permet ainsi, en sélectionnant la combinaison spécifique précitée de plage de volume dudit dispositif radiofréquence et de plage de PIRE[dBmi] totale, de proposer un dispositif radiofréquence permettant la mise en œuvre d'une « mini-macro » cellule radio, à savoir un site radio mini par sa taille au vu des tailles actuelles de site radio équivalent en performances, et donc aisément installable en toiture, tout en étant suffisamment performant pour former, en combinaison avec une pluralité d'autres dispositifs radiofréquence selon la présente invention, un système radiofréquence dont le fonctionnement correspond à celui d'une macro-cellule.

A noter que lorsqu'optionnellement l'habillage du dispositif radiofréquence est directement un mitron de toiture de bâtiment, alors la présente invention permet de réutiliser l'infrastructure existante, les cheminées étant déjà présentes en toiture et capables de supporter un dispositif radiofréquence selon la présente invention.

Outre les avantages techniques précités, la présente invention permet également indirectement de répondre à d'autres considérations administratives et réglementaires. Classiquement, l'installation d'un site radio selon l'état de la technique est en effet sujet à obtention d'autorisation(s), voire de permis de construire, nécessite de respecter des règlements locaux ou des normes d'urbanisme, certaines localités imposant des restrictions sur l'installation d'antennes pour des raisons esthétiques ou patrimoniales, ou doit faire face à l'opposition des riverains, la crainte des ondes électromagnétiques entraînant souvent des recours et ralentissements.

Le volume de chaque dispositif radiofréquence proposé selon la présente invention est propre à permettre de s'affranchir de ces contraintes administratives ou réglementaires car il est propre à se substituer à un mitron de toiture de bâtiment.

La présente invention permet également indirectement de répondre à d'autres considérations d'ordre économique, en effet en termes de coût l'installation d'un site radio classique coûte entre 100 000 et 200 000 €, voire plus selon la complexité, en raison des infrastructures à déployer et les installations complexes, le coût des équipements de télécommunication de ces installations classiques étant élevé car formés généralement de produits complexes.

La présente invention fournit un dispositif radiofréquence avec des contraintes économiques moindres car alimenté avec juste deux câbles pour l'alimentation électrique et pour la fibre respectivement, à convexion naturelle afin d'éviter avantageusement des nuisances sonores liées aux vibrations qui pourraient gêner les riverains en se propageant dans la structure du bâtiment, et présentant un design compact et simplifié au sein d'un habillage propre à se substituer à un mitron de toiture de bâtiment.

Enfin, en étant d'un volume propre à se substituer à un mitron de toiture de bâtiment, élément souvent existant du paysage, la présente invention permet également indirectement de répondre à d'autres considérations d'ordre environnemental et sociétal.

En effet, classiquement, l'installation d'un site radio selon l'état de la technique se heurte :
- au besoin de protection des espaces naturels/urbains limitant les options d'implantation notamment dans les parcs naturels ou zones protégées, où les contraintes sont plus strictes,
- aux problèmes d'acceptabilité sociale, des collectifs citoyens s'opposant parfois aux nouvelles installations, ralentissant les projets,
- aux nécessité d'intégrations paysagères pour l'acceptabilité sociale, via un arbre factice, un étage factice sur un immeuble, etc.,
et doit respecter le plan local d'urbanisme (PLU) ou encore obtenir l'agrément d'un architecte des bâtiments de France par exemple.

En étant d'un volume propre à se substituer à un mitron de toiture de bâtiment, le dispositif radiofréquence proposé respecte de telle contraintes environnementales et sociétales, car un mitron est déjà connu dans le paysage, le produit ne dégrade donc pas l'aspect visuel des bâtiments, respecte les PLU car les cheminées sont forcément autorisées ou préexistantes, de même que les exigences des architectes des bâtiments de France par exemple.

La présente invention permet donc de simplifier énormément le déploiement d'équipements radio et d'être installé dans tous les environnements même ceux impossibles actuellement.

## Revendications

1. Dispositif radiofréquence (10,20) d'un réseau de télécommunication, ledit dispositif radiofréquence étant propre à émettre et recevoir en extérieur des signaux radiofréquence, configuré pour être installé en toiture de bâtiment, et comprenant au moins :
- un ensemble radiofréquence, à convexion naturelle, comprenant un système antennaire (30) et un module radiofréquence (26, 28),
- un module d'alimentation électrique dudit ensemble radiofréquence ;
- un habillage (12, 22) transparent aux ondes électromagnétiques formant une enceinte opaque autour dudit ensemble radiofréquence,
**caractérisé en ce que** le volume dudit dispositif radiofréquence est inférieur à un seuil de volume prédéterminé égal à quinze litres et **en ce que** sa puissance isotrope rayonnée équivalente totale est supérieure à cinquante-cinq dBmi.

2. Dispositif radiofréquence (10, 20) selon la revendication 1, dans lequel ledit volume est contenu dans un cylindre de 24cm de diamètre et de 60cm de hauteur.

3. Dispositif radiofréquence (10) selon l'une quelconque des revendications précédentes, dans lequel le poids maximal dudit dispositif radiofréquence (10) est sensiblement égal à 12kg.

4. Dispositif radiofréquence (10) selon l'une quelconque des revendications précédentes, dans lequel ledit habillage (12) comprend au moins deux ouvertures (14) dont la disposition l'une par rapport à l'autre est configurée pour faire circuler l'air au sein de ladite enceinte.

5. Dispositif radiofréquence (10, 20) selon la revendication 4, dans lequel lesdites au moins deux ouvertures sont localisées aux extrémités verticales dudit habillage.

6. Dispositif radiofréquence (10) selon l'une quelconque des revendications précédentes dans lequel ledit dispositif radiofréquence (10) présente un indicateur représentatif de la direction de son faisceau d'émission.

7. Dispositif radiofréquence (10) selon l'une quelconque des revendications précédentes dans lequel ledit habillage est configuré pour être solidarisé à une souche de cheminée de bâtiment ou à un conduit de cheminée ou de ventilation.

8. Dispositif radiofréquence (10) selon la revendication 7, dans lequel ledit habillage est configuré pour se substituer à un mitron de toiture de bâtiment.

9. Dispositif radiofréquence (10) selon l'une quelconque des revendications précédentes, dans lequel ledit dispositif radiofréquence comprend en outre au moins un port de connexion configuré pour relier par fibre optique (18) ledit ensemble radiofréquence à un réseau optique passif.

10. Dispositif radiofréquence (10) selon la revendication 9 dans lequel ledit réseau optique passif est un réseau fibre optique jusqu'au domicile FTTH.

11. Dispositif radiofréquence (10) selon l'une quelconque des revendications précédentes, dans lequel ledit dispositif radiofréquence comprend en outre un module GNSS interne au dispositif.

12. Système radiofréquence (40) pour réseau de télécommunication configuré pour être installé en toiture de bâtiment **caractérisé en ce qu'**il comprend au moins deux dispositifs radiofréquence selon l'une quelconque des revendications précédentes.

13. Système radiofréquence (40) selon la revendication 12, dans lequel ledit système comprend au moins deux dispositifs radiofréquence selon l'une quelconque des revendications précédentes configurés pour émettre en combinaison dans un même secteur d'émission.

14. Système radiofréquence (40) selon la revendication 13, dans lequel ledit système comprend un module configuré pour multiplexer les signaux émis par lesdits au moins deux dispositifs radiofréquence dans le même azimut.

15. Système radiofréquence (40) selon la revendication l'une quelconque des revendications précédentes 12 à 14, dans lequel ledit système comprend au moins trois dispositifs radiofréquence selon l'une quelconque des revendications précédentes configurés pour émettre respectivement dans trois secteurs d'émission distincts.

## Revendications modifiées

### Revendications modifiées conformément à la règle 137(2) CBE.

1. Dispositif radiofréquence (10,20) d'un réseau de télécommunication, ledit dispositif radiofréquence étant propre à émettre et recevoir en extérieur des signaux radiofréquence, configuré pour être installé en toiture de bâtiment, et comprenant au moins :
- un ensemble radiofréquence, à convexion naturelle, comprenant un système antennaire (30) et un module radiofréquence (26, 28),
- un module d'alimentation électrique dudit ensemble radiofréquence ;
- un habillage (12, 22) transparent aux ondes électromagnétiques formant une enceinte opaque autour dudit ensemble radiofréquence,
**caractérisé en ce que** le volume dudit dispositif radiofréquence (10,20) est inférieur à un seuil de volume prédéterminé égal à quinze litres et **en ce que** sa puissance isotrope rayonnée équivalente totale est supérieure à cinquante-cinq dBmi.

2. Dispositif radiofréquence (10, 20) selon la revendication 1, dans lequel ledit volume est contenu dans un cylindre de 24cm de diamètre et de 60cm de hauteur.

3. Dispositif radiofréquence (10) selon l'une quelconque des revendications précédentes, dans lequel le poids maximal dudit dispositif radiofréquence (10) est sensiblement égal à 12kg.

4. Dispositif radiofréquence (10) selon l'une quelconque des revendications précédentes, dans lequel ledit habillage (12) comprend au moins deux ouvertures (14) dont la disposition l'une par rapport à l'autre est configurée pour faire circuler l'air au sein de ladite enceinte.

5. Dispositif radiofréquence (10, 20) selon la revendication 4, dans lequel lesdites au moins deux ouvertures sont localisées aux extrémités verticales dudit habillage.

6. Dispositif radiofréquence (10) selon l'une quelconque des revendications précédentes dans lequel ledit dispositif radiofréquence (10) présente un indicateur représentatif de la direction de son faisceau d'émission.

7. Dispositif radiofréquence (10) selon l'une quelconque des revendications précédentes dans lequel ledit habillage est configuré pour être solidarisé à une souche de cheminée de bâtiment ou à un conduit de cheminée ou de ventilation.

8. Dispositif radiofréquence (10) selon la revendication 7, dans lequel ledit habillage est configuré pour se substituer à un mitron de toiture de bâtiment.

9. Dispositif radiofréquence (10) selon l'une quelconque des revendications précédentes, dans lequel ledit dispositif radiofréquence comprend en outre au moins un port de connexion configuré pour relier par fibre optique (18) ledit ensemble radiofréquence à un réseau optique passif.

10. Dispositif radiofréquence (10) selon la revendication 9 dans lequel ledit réseau optique passif est un réseau fibre optique jusqu'au domicile FTTH.

11. Dispositif radiofréquence (10) selon l'une quelconque des revendications précédentes, dans lequel ledit dispositif radiofréquence comprend en outre un module GNSS interne au dispositif.

12. Système radiofréquence (40) pour réseau de télécommunication configuré pour être installé en toiture de bâtiment **caractérisé en ce qu'**il comprend au moins deux dispositifs radiofréquence selon l'une quelconque des revendications précédentes.

13. Système radiofréquence (40) selon la revendication 12, dans lequel ledit système comprend au moins deux dispositifs radiofréquence selon l'une quelconque des revendications précédentes configurés pour émettre en combinaison dans un même secteur d'émission.

14. Système radiofréquence (40) selon la revendication 13, dans lequel ledit système comprend un module configuré pour multiplexer les signaux émis par lesdits au moins deux dispositifs radiofréquence dans le même azimut.

15. Système radiofréquence (40) selon la revendication l'une quelconque des revendications précédentes 12 à 14, dans lequel ledit système comprend au moins trois dispositifs radiofréquence selon l'une quelconque des revendications précédentes configurés pour émettre respectivement dans trois secteurs d'émission distincts.
